Europäisches Patentamt

European Patent Office

Office européen des brevets

(11) Publication number: 0 503 400 B1

# EUROPEAN PATENT SPECIFICATION

(45) Date of publication of patent specification: 06.09.95   (51) Int. Cl.⁶: B60Q 3/04, G01D 11/04, G01D 11/28

(21) Application number: 92103451.8

(22) Date of filing: 28.02.92

(54) **Measuring instrument indicator with a luminous pointer.**

(30) Priority: 08.03.91 IT TO910053 U

(43) Date of publication of application:
16.09.92 Bulletin 92/38

(45) Publication of the grant of the patent:
06.09.95 Bulletin 95/36

(84) Designated Contracting States:
DE ES FR GB

(56) References cited:
GB-A- 2 007 842     GB-A- 2 018 485
GB-A- 2 024 426     US-A- 3 143 098
US-A- 4 257 084     US-A- 4 872 415
US-A- 4 959 759

RESEARCH DISCLOSURE no. 298, February
1989, EMSWORTH 'Multi-Color Point-
er(29831)'

(73) Proprietor: MAGNETI MARELLI S.p.A.
Via Griziotti 4
I-20145 Milano (IT)

(72) Inventor: Poppa, Antonio
Via Benozzo Gozzoli, 160/4
I-20100 Milano (IT)
Inventor: Franzosi, Roberto
Viale San Gimignano, 10
I-20100 Milano (IT)

(74) Representative: Jorio, Paolo et al
Studio Torta,
Via Viotti, 9
I-10121 Torino (IT)

## Description

The present invention relates to a measuring instrument indicator with a luminous pointer, the indicator comprising a fixed, substantially round dial with a scale; and means for lighting the dial, and the pointer comprising a hand forming one piece with a hub rotating about a center axis of the dial.

Indicators of the aforementioned type are used for enabling measuring instruments, such as those on the dashpanel of cars or other vehicles, to be read in the dark. On the known instruments of this type, the dial and/or pointers are usually lit by bulbs inside the instrument housing, the light of which is supplied to the indicator by means of pipes consisting of conveying appendixes, which seriously complicate the design of the instrument.

It is known from the document US-A-4 959 759 a pointer for viewing automotive instruments in low ambient light conditions. Therein a solid state electroluminescent lamp, in form of a multilayered disk, is placed between a circular aperture of the instrument faceplate and a pointer drive mechanism. The pointer is located on the side of the faceplate opposite the lamp and is provided with a mirrored surface to reflect the light received by the lamp, across the aperture, along a needle of the pointer. This document forms the preamble of claim 1. There are also known from the documents GB-A-2 007 842 and GB-A-2 024 426 indicator gauges with illuminated pointers, wherein both the dial and the pointer are made of transparent material. The dial is provided with a circular opening housing a hub of the pointer. Either the pointer or the dial is provided with a first reflecting surface to reflect the light toward a curved reflecting surface of the hub. A suitable number of light sources is arranged around the periphery of the dial so that the light rays can pass through the surface of the opening of dial to be reflected sequentially by the first and the second reflecting surface along the pointer.

It is an object of the present invention to provide a straightforward indicator with a luminous pointer, designed to overcome the drawbacks typically associated with the aforementioned indicators.

According to the present invention, there is provided a measuring instrument indicator with a luminous pointer, comprising a fixed, substantially round dial with a scale; lighting means for lighting said dial; said pointer comprising a hub made of transparent material and forming one piece with an indicator hand; said lighting means being fitted to said dial, adjacent to said hub, which is adapted to turn about an axis through the center of said dial; said hub comprising at least one surface illuminated by the light emitted by said lighting means through said transparent material; said surface being adapted to reflect, towards said hand, a substantial part of said light incident thereon; characterised in that said hub is provided with an annular groove facing said lighting means, for conveying part of said light on to said surface.

A preferred, non-limiting embodiment of the present invention will be described by way of example with reference to the accompanying drawings, in which:

Fig.1 shows a schematic front view of a measuring instrument featuring an indicator in accordance with the present invention;

Fig.2 shows a larger-scale, partial section along line II-II in Fig.1;

Fig.3 shows a partial front view of the Fig.2 pointer;

Fig.4 shows an efficiency graph of the indicator.

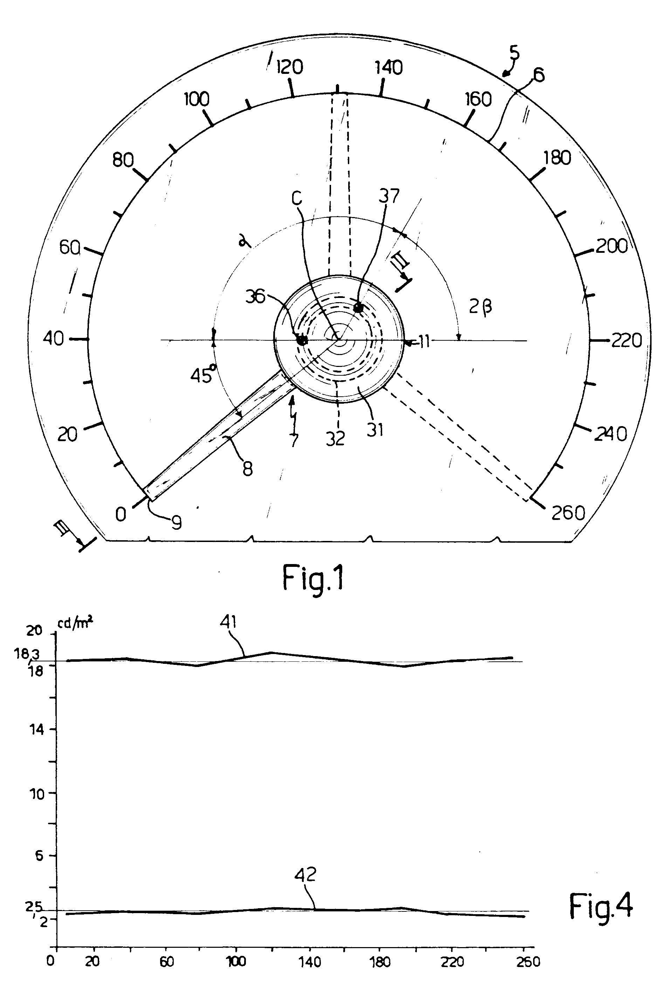

Number 5 in Fig.1 indicates the dial of a measuring instrument, such as a car speedometer or engine speed indicator, having a scale 6 consisting of a series of numbers arranged in a circle about center C. Dial 5 may be made of opaque plastic material, such as polycarbonate.

Cooperating with dial 5 is a pointer indicated as a whole by 7 and comprising a hand 8, the free end 9 of which indicates the measurement on scale 6; and a substantially round hub 11 forming one piece with hand 8.

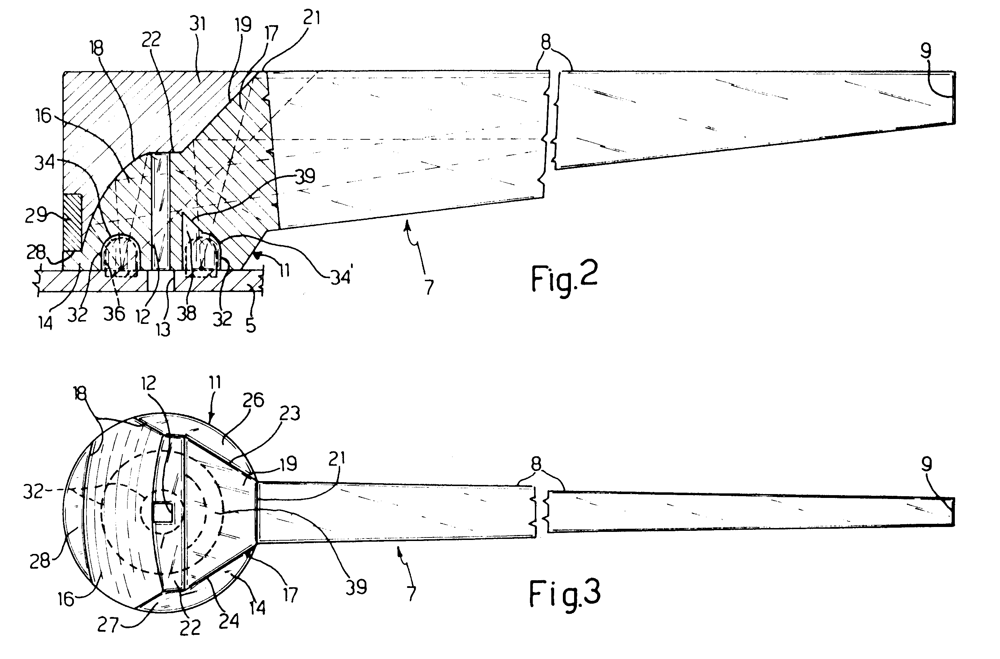

Hub 11 presents a square-section center hole 12 (Fig.2) by which it is fitted on to a square-section shaft (not shown in Fig.2). The shaft fits through a hole 13 in dial 5, is concentric with center C, and is turned by the measuring instrument together with pointer 7, so that end 9 of hand 8 (Fig.1) moves in a circle about center C and of radius R.

When idle, pointer 7 is set to the zero mark on scale 6. In Fig.1, the numbers on scale 6 indicate the degrees of each position in relation to zero. The normal maximum sweep of pointer 7 is at least 200°, but, as this may be as high as 260°, as shown in Fig.1, the vertical center line of scale 6 is at 130° in relation to the zero position.

According to the present invention, pointer 7 (Fig.s 2 and 3) is made of transparent material with a given index of refraction and a corresponding critical angle. Pointer 7 may conveniently be made of transparent, light-stable thermoplastic resin, such as a methacrylate, or polymethyl methacrylate known by the trade name of Plexiglass.

Hub 11 comprises a substantially disk-shaped bottom portion 14; and a top portion 16 opposite to and connected to hand 8 by a connecting portion 17.

Portion 16 presents a truncated-cone-shaped rear reflecting surface 18 consisting of a portion of a surface of revolution about an axis parallel to hole 12. Surface 18 presents a square-law curve section, the characteristics of which will be described later on. Said curve may conveniently be formed according to the following equation:

$$S(X^2 + SY^2) = r^2$$

where r is the radius of the surface of revolution, which may be smaller than or equal to radius R of hand 8; and S is an experimental coefficient, which may be assumed equal to 2.5.

Connecting portion 17 of hub 11 presents a flat top reflecting surface 19, which is connected, on one side, to the top surface of hand 8 by edge 21, and, on the other, to truncated-cone-shaped surface 18 by a flat surface 22 perpendicular to hole 12. Portion 17 also presents two converging flat lateral surfaces 23, 24 (Fig.3) defining two shoulders 26, 27 on disk 14.

Surface 18 defines, on disk 14, a further shoulder 28 in which is fitted a counterweight 29 (Fig.2), e.g. of lead, for balancing the weight of hand 8 on the instrument shaft. Portions 16 and 17, counterweight 29 and shoulders 26-28 are encased in a substantially cylindrical block 31 of opaque plastic material.

The bottom surface of hub 11 presents an annular groove 32 (Fig.s 2 and 3) having a substantially semicircular-section vault 34. At groove 32, dial 5 is fitted with at least one light-emitting diode or LED 36 (Fig.1) supplied with voltage in known manner, so as to emit a given light, which is therefore projected from the center of vault 34.

When pointer 7 is so positioned as to house LED 36 along its mid section, as shown by the dotted lines in Fig.2, i.e. when pointer 7 is turned clockwise roughly 135° in relation to the zero position in Fig.1, the light emitted by LED 36 through vault 34 is reflected by surface 18 of portion 16 into hand 8, thus lighting it. It should be pointed out that, as LED 36 is practically monochromatic, emitting only the colour corresponding to the emission wave length, this characteristic is also transferred to hand 8, thus providing for an excellent saturation level.

If, however, hand 8 is turned by a given angle in relation to said optimum position, the light emitted by LED 36 is diffused along groove 32, thus reaching part of surface 18 by which it is reflected as described previously. The lighting efficiency, i.e. brightness, of hand 8, however, decreases alongside an increase in the angle of hand 8 in relation to said optimum position.

To rectify this, dial 5 is fitted with a second LED 37, on the opposite side of the center line of scale 6 in relation to LED 36. LED's 36 and 37 may conveniently be located so as to form, for example, an angle α of roughly 120°. As pointer 7 is most frequently located between the zero and center positions on scale 6, the location of LED's 36 and 37 may be offset towards the zero mark by an angle β, that is, so that LED 37 forms an angle 2β in relation to the horizontal line. Angle β, for example, may be roughly 30°, so that LED 36 is located on the horizontal line, as shown in Fig.1.

Also, at portion 17 of hub 11, vault 34 of groove 32 (Fig.2) presents a triangular-section recess 38 having a conical surface 39 leaving only a half vault 34'. When pointer 7 is so positioned that one of LED's 36 and 37 is located in the recessed portion of groove 32, the light emitted on to half vault 34' travels directly towards hand 8.

The incident light on conical surface 39, on the other hand, is refracted upwards through portion 17. As the incidence angle of the light on flat surface 19 is greater than the critical angle of refraction, said light is reflected towards hand 8 of pointer 7, thus increasing the brightness of the same.

The light emitted by LED's 36 and 37 at the recessed portion of groove 32 is shown by the dotted lines in Fig.2. Consequently, LED's 36 and 37 not only alternate in the whole-vault portion of groove 32, but also operate in conjunction with each other, by operating substantially simultaneously, one in the whole-vault portion of groove 32, and the other in the half-vault portion featuring recess 38.

Fig.4 shows a brightness graph as a function of the angle of pointer 7. Number 41 shows the brightness of hand 8 lit using LED's 36 and 37 arranged as described above; and 42 the comparative brightness of a traditional hand lit using bulbs. As shown in Fig.4, pointer 7 according to the present invention provides for a 600% increase in brightness as compared with traditional indicators.

The advantages of the indicator according to the present invention will be clear from the foregoing description. In particular, it provides for an enormous increase in the brightness of hand 8; for a substantially saturated spectral colour display; and for eliminating the light pipes and reducing the internal temperature of the measuring instrument. Moreover, the working life of the LED's is far greater than that of traditional bulbs.

To those skilled in the art it will be clear that changes may be made to the indicator as described and illustrated herein without, however, departing from the scope of the claims. For example, changes may be made to the form of either or both reflecting surfaces 18 and 19, or to the location of either or both LED's 36 and 37; LED's 36 and 37 may be selected so as to emit light of two different colours, e.g. green and red, for respectively indicating normal and exceptional settings of the indicator hand (e.g. due to speeding or overheating); the LED's may be replaced by miniaturized incandescent lamps; and, finally, the indicator itself may be applied to any measuring instrument involving dark or nighttime reading.

## Claims

1. A measuring instrument indicator with a luminous pointer, comprising a fixed, substantially round dial (5) with a scale (6); lighting means (36, 37) for lighting said dial (5); said pointer (7) comprising a hub (11) made of transparent material and forming one piece with an indicator hand (8); said lighting means (36, 37) being fitted to said dial (5), adjacent to said hub (11), which is adapted to turn about an axis through the center (C) of said dial (5); said hub (11) comprising at least one surface (18, 19) illuminated by the light emitted by said lighting means (36, 37) through said transparent material; said surface (18, 19) being adapted to reflect, towards said hand (8), a substantial part of said light incident thereon; characterised in that said hub (11) is provided with an annular groove (32) facing said lighting means (36, 37), for conveying part of said light on to said surface (18, 19).

2. An indicator as claimed in claim 1, characterised in that said lighting means comprise at least one light-emitting diode (36, 37).

3. An indicator as claimed in claim 2, wherein said at least one surface (18, 19) includes a curved surface (18) formed of a surface of revolution about an axis parallel to the axis of said hub (11); said curved surface (18) being located on the opposite side to said hand (8); characterised in that at least one said surface (18, 19) also comprises a fiat surface (19) for reflecting the said emitted light when said hand (8) is located substantially towards the position of said diode (36, 37).

4. An indicator as claimed in claim 3, characterised in that said curved surface (18) forms a shoulder (28) on said hub (11), which is fitted by a counterweight (29).

5. An indicator as claimed in claim 3 or 4, characterised in that said groove (32) presents a vault surface (34); a portion (34') of said vault surface (34), adjacent to said hand (8), presenting a recess (38) with a substantially conical surface (39) associated with and directing to said flat surface (19) the light emitted by said diode (36, 37).

6. An indicator as claimed in any of the foregoing claims, wherein said scale (6) presents a center line, characterised in that two lighting elements (36, 37) are provided for emitting light of two different wave lengths; said lighting elements (36, 37) being located at two angles and in two opposite portions of said scale (6) in relation to said center line.

7. An indicator as claimed in claim 6, characterised in that said pointer (7) turns through an angle of at least 200°; said lighting elements (36, 37) being located roughly 120° apart, and offset roughly 30° toward the zero of said scale (6).

## Patentansprüche

1. Meßinstrument-Anzeigevorrichtung mit einem leuchtenden Zeiger, welche eine feststehende im wesentlichen runde Skalenscheibe (5) mit einer Skala (6) und Beleuchtungsmittel (36, 37) zum Beleuchten der Skalenscheibe (5) aufweist, wobei der Zeiger (7) mit einer aus transparentem Material hergestellten und mit einer Zeigerzunge (8) eine Einheit bildenden Nabe (11) versehen ist und die Beleuchtungsmittel (36, 37) an der Skalenscheibe (5) benachbart zur Nabe (11) angeordnet sind, die um eine durch den Mittelpunkt (C) der Skalenscheibe (5) verlaufende Achse drehbar gelagert ist, wobei die Nabe (11) wenigstens eine durch das von den Beleuchtungsmitteln (36, 37) emittierte Licht durch das transparente Material beleuchtete Fläche (18, 19) aufweist, welche so ausgebildet ist, daß sie einen wesentlichen Teil des auf ihr einfallenden Lichtes in Richtung auf die Zunge (8) reflektiert,
**dadurch gekennzeichnet**,
daß die Nabe (11) mit einer den Beleuchtungsmitteln (36, 37) zugewandten ringförmigen Nut (32) zur Übertragung eines Teils des Lichtes auf die besagte Fläche (18, 19) versehen ist.

2. Anzeigevorrichtung nach Anspruch 1, dadurch gekennzeichnet, daß die Beleuchtungsmittel wenigstens eine lichtemittierende Diode (36, 37) aufweisen.

3. Anzeigevorrichtung nach Anspruch 2, wobei die wenigstens eine Fläche (18, 19) eine gekrümmte Fläche (18) aufweist, welche aus einer durch Rotation um eine parallel zur Achse der Nabe (11) verlaufende Achse entstehenden Fläche geformt ist, wobei die gekrümmte Fläche (18) auf der der Zunge (8) gegenüberliegenden Seite angeordnet ist, dadurch gekennzeichnet, daß wenigstens eine besagte Fläche (18, 19) zusätzlich eine ebene Fläche (19) zur Reflexion des emittierten Lichtes aufweist, wenn die Zunge (8) im wesentlichen auf die Position der Diode (36, 37) ausgerichtet ist.

4. Anzeigevorrichtung nach Anspruch 3, dadurch gekennzeichnet, daß die gekrümmte Fläche (18) auf der Nabe (11) eine Schulter (28) bildet, auf welcher ein Gegengewicht (29) angeordnet ist.

5. Anzeigevorrichtung nach Anspruch 3 oder 4, dadurch gekennzeichnet, daß die Nut (32) eine gewölbte Fläche (34) aufweist, deren an die Zunge (8) angrenzender Abschnitt (34') eine Aussparung (38) mit im wesentlichen konischer Oberfläche (39) besitzt, welche mit der ebenen Fläche (19) verbunden ist und das von der Diode (36, 37) emittierte Licht in Richtung auf die ebene Fläche (19) lenkt.

6. Anzeigevorrichtung nach einem der vorangegangenen Ansprüche mit einer eine Mittellinie aufweisenden Skala (6), dadurch gekennzeichnet, daß zwei Licht unterschiedlicher Wellenlängen emittierende Beleuchtungselemente (36, 37) vorgesehen sind, welche unter zwei Winkeln und bezüglich der Mittellinie auf gegenüberliegenden Teilen der Skala (6) angeordnet sind.

7. Anzeigevorrichtung nach Anspruch 6, dadurch gekennzeichnet, daß der Zeiger (7) einen Anzeigewinkel von wenigstens 200° besitzt und daß die Beleuchtungselemente (36, 37) um ungefähr 120° voneinander getrennt angeordnet und um ungefähr 30° gegenüber dem Nullpunkt der Skala (6) versetzt sind.

**Revendications**

1. Affichage d'instrument de mesure à index lumineux, comprenant un cadran fixe, sensiblement rond (5) comportant une graduation (6) ; un moyen d'éclairage (36, 37) pour éclairer ledit cadran (5) ; ledit index (7) comprenant un moyeu (11) réalisé en matière transparente et en une pièce avec une aiguille d'affichage (8) ; ledit moyen d'éclairage (36, 37) étant monté sur ledit cadran (5) au voisinage dudit moyeu (11) qui est destiné à tourner autour d'un axe passant par le centre (C) du cadran (5) ; ledit moyeu (11) comprenant au moins une surface (18, 19) éclairée par la lumière émise par ledit moyen d'éclairage (36, 37) à travers ladite matière transparente ; ladite surface (18, 19) étant destinée à réfléchir vers ladite aiguille (8) une partie importante de ladite lumière qui est incidente sur elle ; caractérisé en ce que ledit moyeu (11) comporte une gorge annulaire (32) qui est en face dudit moyen d'éclairage (36, 37) afin de transporter une partie de ladite lumière vers ladite surface (18, 19).

2. Affichage selon la revendication 1, caractérisé en ce que ledit moyen d'affichage comprend au moins une diode électroluminescente (36, 37).

3. Affichage selon la revendication 2, dans lequel ladite au moins une surface (18, 19) comprend une surface courbe (18) formée d'une surface de révolution autour d'un axe parallèle à l'axe dudit moyeu (11) ; ladite surface courbe (18) étant placée sur le côté opposé à celui de ladite aiguille (8) ; caractérisé en ce que ladite au moins une surface (18, 19) comprend aussi une surface plane (19) destinée à réfléchir ladite lumière émise lorsque ladite aiguille (8) est placée sensiblement vers la position de ladite diode (36, 37).

4. Affichage selon la revendication 3, caractérisé en ce que ladite surface courbe (18) forme sur ledit moyeu (11) un épaulement (28) qui est équipé d'un contrepoids (29).

5. Affichage selon la revendication 3 ou 4, caractérisé en ce que ladite gorge (32) présente une surface en voûte (34) ; une partie (34') de ladite surface en voûte (34) qui est voisine de ladite aiguille (8) présentant un évidement (38) comportant une surface sensiblement conique (39) associée à et dirigeant vers ladite surface plane (19) la lumière émise par ladite diode (36, 37).

6. Affichage selon l'une quelconque des revendications précédentes, dans lequel ladite graduation (6) présente une ligne centrale, caractérisé en ce que deux éléments d'éclairage (36, 37) sont prévus pour émettre des lumières de deux longueurs d'ondes différentes ; lesdits éléments d'éclairage (36, 37) étant placés suivant deux angles et dans deux parties opposées de ladite graduation (6) par rapport à ladite ligne centrale.

7. Affichage selon la revendication 6, caractérisé en ce que ledit index (7) tourne d'un angle d'au moins 200° ; lesdits éléments d'éclairage (36, 37) étant placés à peu près à 120° l'un de l'autre et étant décalés d'à peu près 30° vers le zéro de ladite graduation (6).

Fig.1

Fig.4

Fig.2

Fig.3

EP 0 503 400 B1